# EUROPEAN PATENT SPECIFICATION

(11) **EP 2 272 708 B1**
(45) Date of publication and mention of the grant of the patent: **29.02.2012**
(21) Application number: 10165896.1
(22) Date of filing: 14.06.2010
(51) Int. Cl.: B60N 2/28

(54) **Group 0 and group 1 car seat with position adjustment means**
Kindersitz mit Regelung der Sitzlage
Siège enfant avec moyens de réglage du positionnement

(30) Priority: 08.07.2009 IT MI20091207
(43) Date of publication of application: 12.01.2011
(73) Proprietor: Cam Il Mondo Del Bambino S.p.A., 24060 Telgate (BG) (IT)
(72) Inventor: Rho, Gianfranco, 24060 Telgate BG (IT)
(74) Representative: Modiano, Micaela Nadia

(56) References cited:
- EP-A- 1 839 936
- WO-A-2005/002908
- WO-A-2005/054000
- WO-A-2009/131123
- DE-A1- 10 045 386
- US-B1- 7 073 859

## Description

The present invention relates to a group 0 and group 1 car seat, with position adjustment means, (see, for example, WO 2005/054000 A1, corresponding to the preamble of claim 1).

As is known, group 0 and group 1 car seats are used for children from birth up to a weight of 18 kg, which corresponds usually to four years of age.

In the group 0 configuration, i.e., up to 9 kg, or 0+, i.e., up to 13 kg, the car seat must be installed in the direction opposite to the direction of travel, i.e., the rear part of the back is directed toward the front part of the motor vehicle, while for use in group 1 the seat must be installed facing forward, i.e., with the back arranged at the back of the seat, with the front part of the back directed toward the front part of the vehicle, i.e., in the direction of travel.

This type of car seat suffers drawbacks that arise from the fact that the sitting surface of the motor vehicle seat is usually inclined, in that the front edge of the sitting surface is at a higher level than the rear edge, i.e., the edge directed toward the back.

This tilt is certainly advantageous in the case of car seats installed facing forward, i.e., with the face of the child directed toward the direction of travel, and is instead negative in the case of group 0 or group 0+ car seats in which the face of the child is directed away from the direction of travel, because the tilt itself is unfavorable in terms of comfort, since it becomes easier for small children to sleep in a car as the travel position becomes more reclined.

Moreover, it has been found experimentally that it is certainly a mistake to place an excessively small child in an excessively vertical position.

In order to try to solve the problem, refinements have already been provided which allow to increase the tilt of the back with the seat installed in a position that is opposite with respect to the direction of travel, but these solutions, besides being very complex in terms of construction, have not proven themselves valid from an applicative standpoint, because they create difficulties for performing correct positioning.

Moreover, another problem that can be observed with the solutions of the background art resides in that the tensioning of the belts that retain the car seat to the vehicle seat varies as a function of the inclination of the car seat, thus requiring separate and successive adjustments.

The aim of the invention is to eliminate the drawbacks noted above by providing a group 0 and group 1 car seat, with position adjustment means, that allows to obtain always the correct position both when installing the car seat so that it faces forward and when installing it in the opposite direction.

Within this aim, an object of the invention is to provide a car seat that allows to keep the tension of the seat belts practically unchanged as the tilting of the car seat varies, thus rendering unnecessary continuous adjustments of the tension of the seat belts.

Another object of the present invention is to provide a car seat which, thanks to its particular constructive characteristics, is capable of giving the greatest assurances of reliability and safety in use.

Another object of the present invention is to provide a group 0 and group 1 car seat, with position adjustment means, that can be obtained easily starting from commonly commercially available elements and materials and is also advantageous from a merely economical standpoint.

This aim and these and other objects that will become better apparent hereinafter are achieved by a group 0 and group 1 car seat, with position adjustment means, as defined in claim 1.

Further characteristics and advantages of the invention will become better apparent from the description of a preferred but not exclusive embodiment, of a group 0 and group I car seat, with position adjustment means, illustrated by way of non-limiting example in the accompanying drawings, wherein:

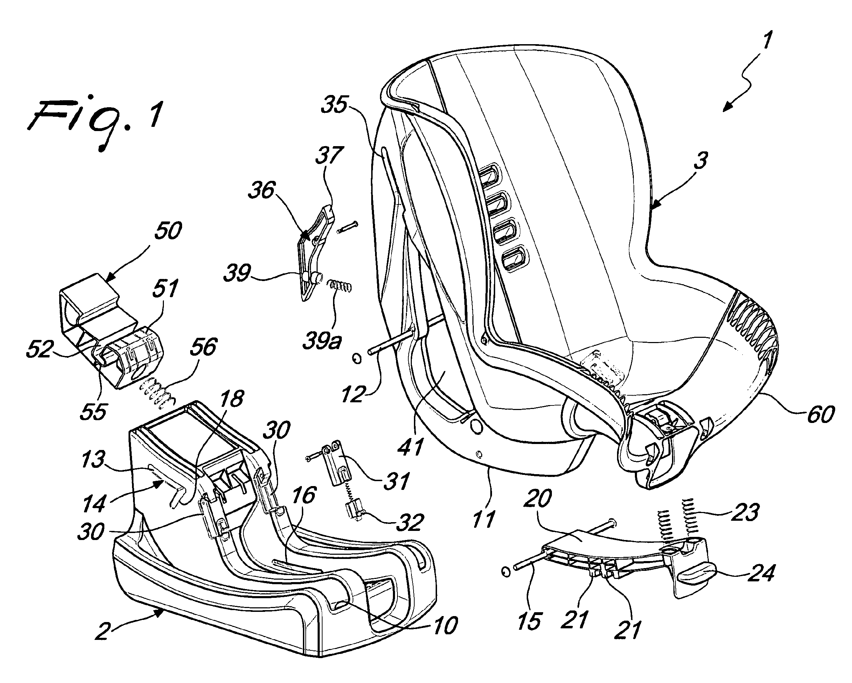

Figure 1 is a schematic exploded perspective view of the car seat according to the invention;
Figure 2 is a view of the car seat installed facing forward;
Figure 3 is a sectional view, taken along a central plane, of the car seat installed facing forward;
Figure 4 is a sectional view, taken along a central plane, of the car seat installed facing forward, with a different adjustment of the tilt;

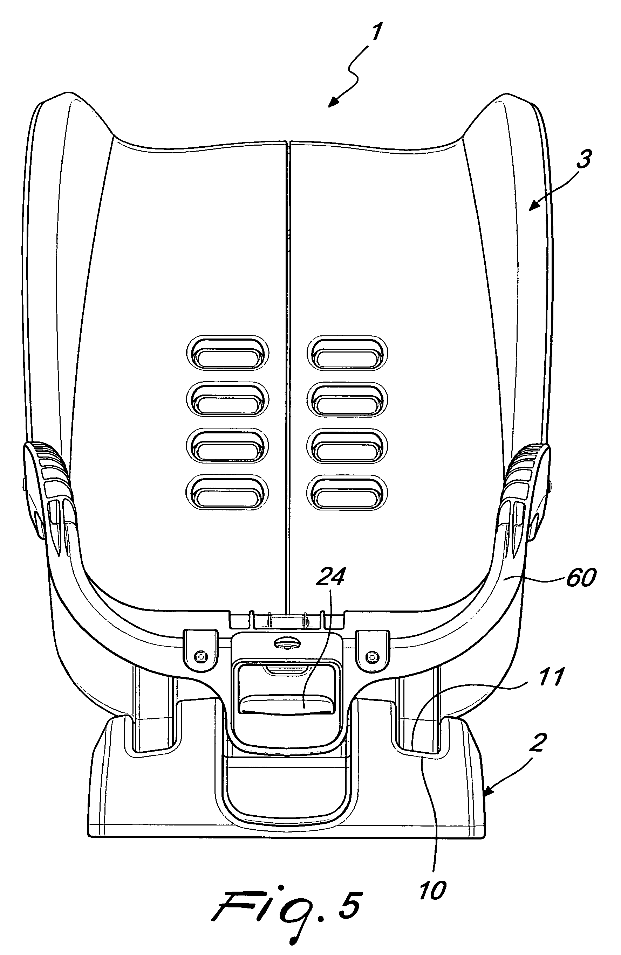

Figure 5 is a front elevation view of the car seat;
Figure 6 is a side elevation view of the car seat installed as group 0, i.e., with its back opposite the back of the vehicle seat;
Figure 7 is a view of the car seat installed as group 0 during the activation of the additional tilting means;
Figure 8 is a sectional view, taken along a central plane, of the car seat installed as group 0 with an additional tilt;
Figure 9 is a perspective view of the means for preventing the tipping of the car seat installed as group 0.

With reference to the figures, the car seat usable as group 0 or 0+ and as group 1, generally designated by the reference numeral 1, comprises a base element 2, to which it is possible to connect a car seat body 3 with the interposition of means for varying the tilt.

In greater detail, the base element 2 defines a cradle-like concave region 10 in which a cradle-like portion 11 provided in the lower part of the car seat engages.

The tilt varying means comprise an upper pivot 12, which is connected to the car seat body 3 and can move in the initial portion 13 of an upper slot generally designated by the reference numeral 14.

Moreover, there is a lower pivot 15 that is accommodated slidingly in a lower slot 16 provided in the car seat body 3.

For correct positioning, an adjustment lever 20 is provided, which is connected to the lower pivot 15 and is provided with coupling teeth 21 which enter removably positioning seats 22 provided in the base element 2.

The adjustment lever 20 is pushed by way of elastic means constituted by helical springs 23, which act between the lever 20 and the lower face of the car seat body 3.

The lever 20 has a grip element 24 that protrudes in front of the car seat body in order to allow easy actuation.

In order to connect the car seat to the seat 70 of the motor vehicle, in the base element 2 there is a pair of guiding recesses 30, which can be closed by means of lower levers 31, which are provided with an actuation slider 32 and allow to retain the lower portion 33 of the seat belts.

The seat, in the upper part proximate to the center of rotation of the car seat body 3 with respect to the base element 2, defines upper recesses 35 which are closed removably in the lower part by means of oscillating levers 36, which have a closing tab 37 that arranges itself at the lower part of the upper recess 35 so as to act as an element for retaining the upper portion 38 of the seat belts.

The oscillating lever 36 has a button-like portion 39, which can be actuated in order to move away, in contrast with elastic means constituted by a spring 39a, the locking tab 37 in order to open the upper recess 35.

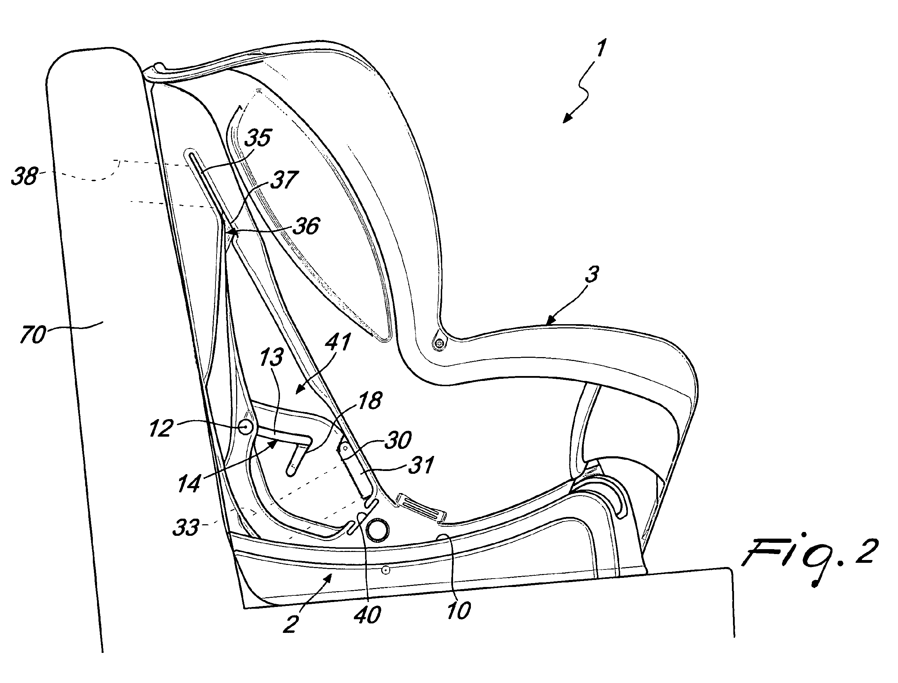

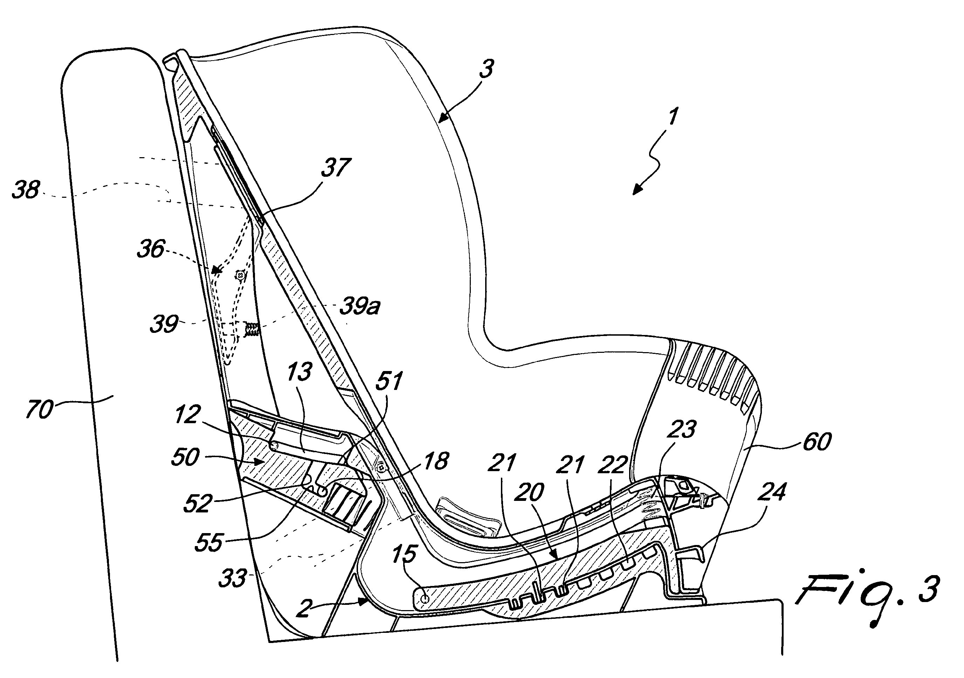

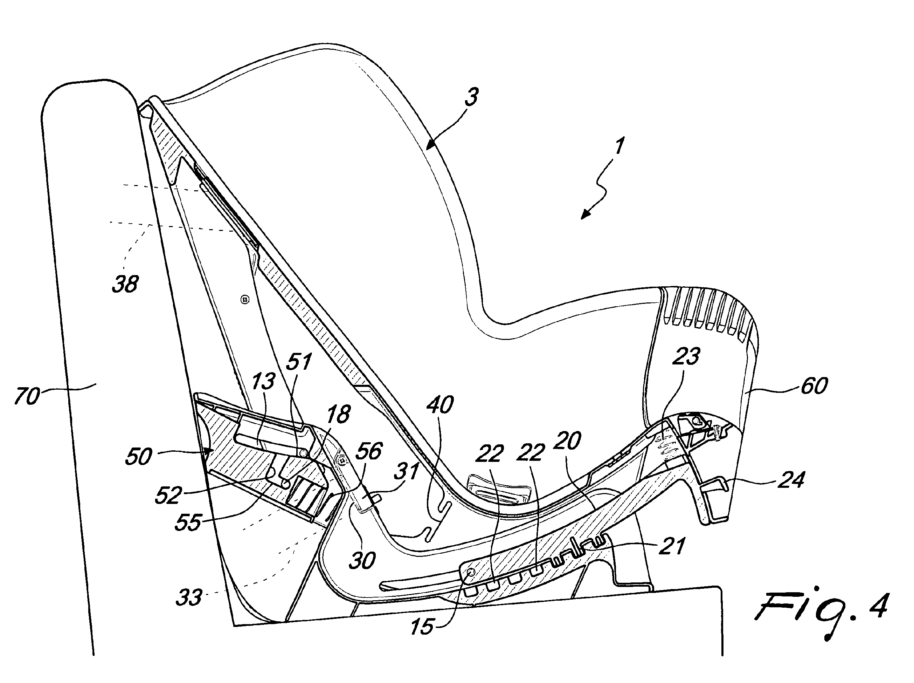

With this type of connection of the car seat used facing forward, as illustrated in Figures 2 to 4, the tension of the seat belts is not modified as the tilt of the car seat body varies, because the lower portion 33 of the seat belt is connected to the base element 2, which is fixed, and the upper portion 38 or tilted portion is associated with the car seat body 3, which can move in a position proximate to the center of rotation, therefore with a particularly small movement.

In order to install the car seat as group 0 or group 0+, the back of the car seat body 3 is arranged so that its rear face is directed toward the front part of the vehicle and in the seat body 3 there is a front slot 40, which is arranged at the lower part of a cutout 41 defined behind the car seat body between the back and the elements for connecting to the base element 2.

A particular feature of the invention resides in that means for additional tilting of the car seat body 3 are provided which can be activated only with the car seat body arranged so that the rear face of its back is directed toward the front part of the vehicle and by way of means for delimiting the movement of the upper pivot 12 in the slot 14.

Substantially, these means are constituted by an additional portion 18 of the upper slot 14 that allows to provide an additional tilt and lies transversely to the initial portion 13.

The movement delimiting means have a control button 50, which can slide at a guiding cavity provided in the base body and defines an abutment portion 51, which is arranged with respect to the upper slot 14 so as to allow the movement of the upper pivot 12 only in the portion 13.

The control button 50 further has an overtravel channel 52, which by acting on the button 50, in contrast with elastic means for overtravel constituted by a cylindrical spring 56, can be arranged at the end of the portion 13 so that the pivot 12 can enter said guiding channel, which arranges itself at the additional portion 18, thus offering the possibility to provide a further tilt.

The button 50 further has a locking portion 55, in which the pivot 12 is inserted when it has arrived at the end of the additional portion 18.

In this position, the car seat body assumes a further tilt, which compensates for the backward tilting of the sitting surface of the seat 70 of the motor vehicle and consequently creates greater comfort for the user.

The overtravel adjustment has a fixed position, so that any errors in positioning the car seat body are assuredly avoided, because it is a serious mistake to place an excessively small child in an excessively vertical position.

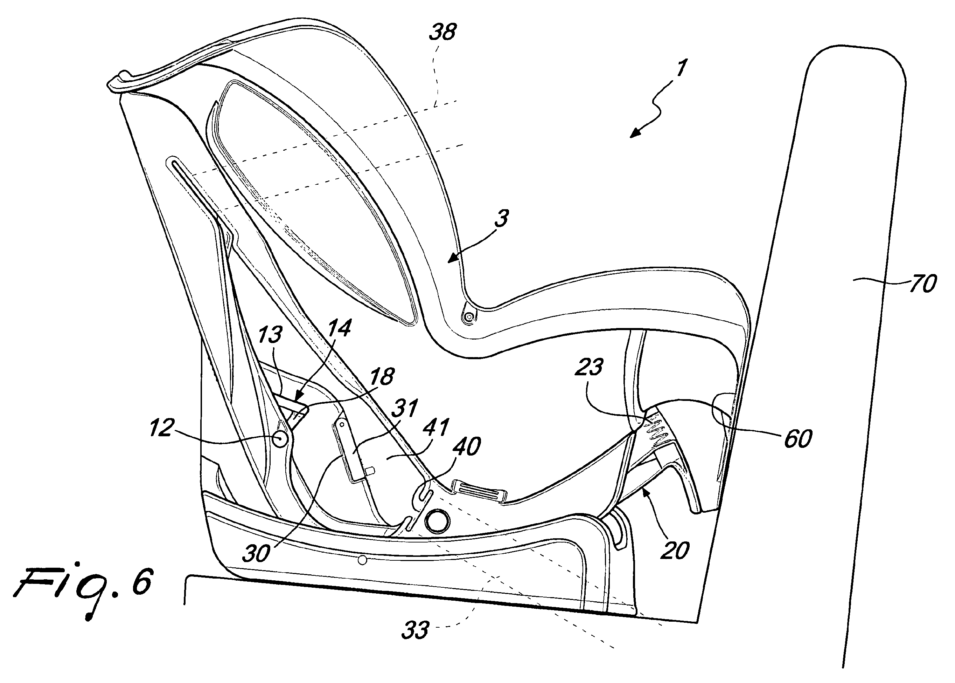

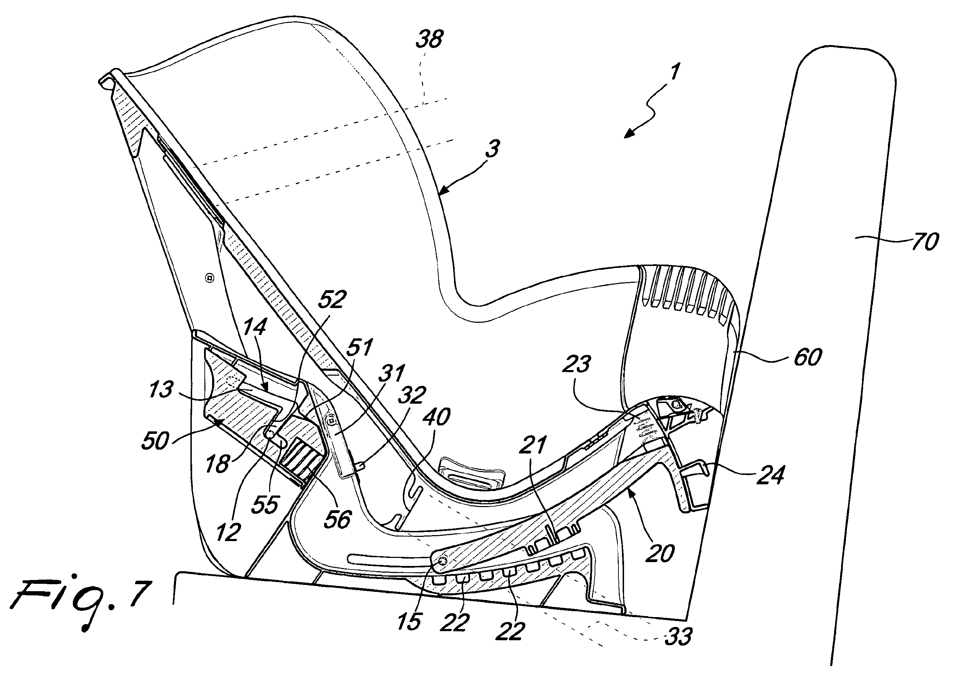

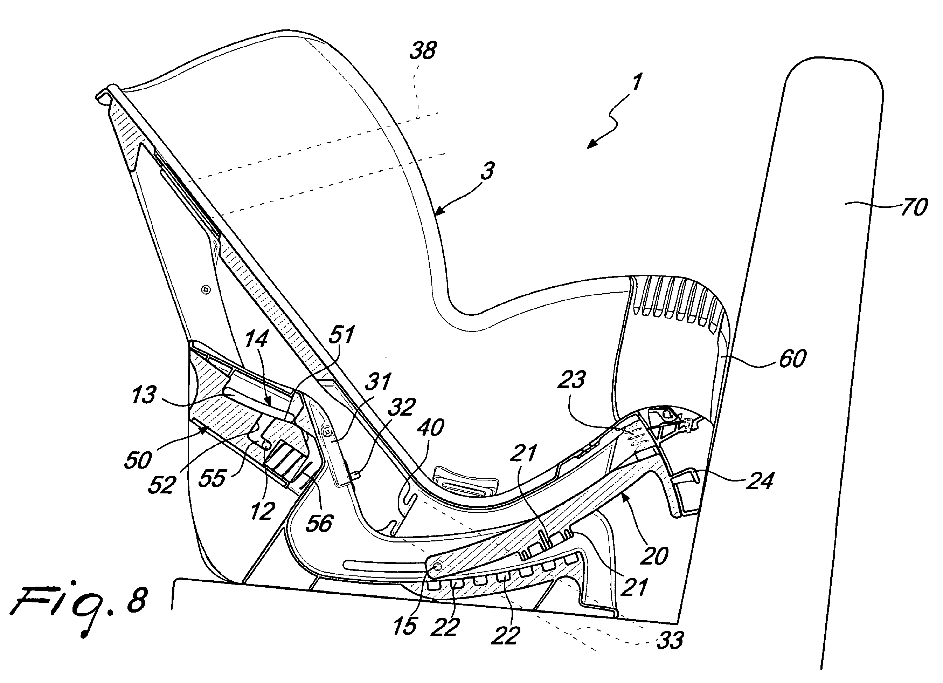

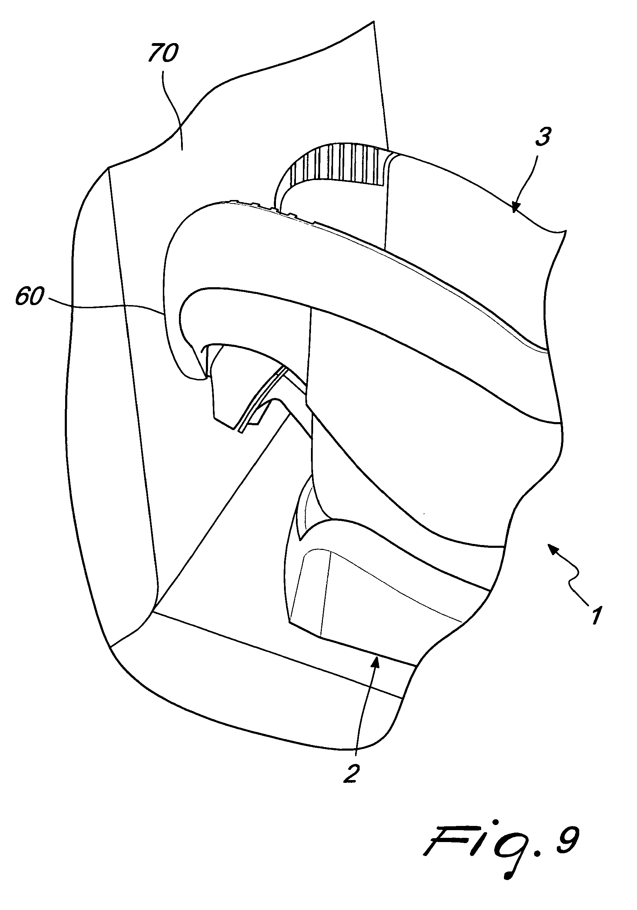

The front portion of the car seat body, as shown more clearly in Figures 6 to 9, defines tipping preventing means, constituted by a resting portion 60 that lies substantially according to a U-shaped portion that provides, at the front edge of the car seat body 3, a plane for resting against the back of the seat of the car and, in case of a rear-end collision, in practice prevents the tipping of the car seat body, thus preventing the head of the child from striking violently the back of the seat 70 of the motor vehicle.

In this embodiment, it is directly the car seat body and, in greater detail, the front portion 60 of its frame that creates a resting region that is extended for a substantial extent in height, so that in practice a tipping preventing connection is automatically obtained.

From what has been described above, it is evident that the invention achieves the intended aim and objects, and in particular the fact is stressed that a group 0 and group 1 car seat, with position adjustment means, is provided which allows to obtain an overtravel of the adjustment of the tilt when the car seat body is arranged in the opposite direction with respect to the direction of travel of the motor vehicle, thus giving greater assurances of comfort and safety for the child.

Moreover, the particular solutions used allow to minimize the need to adjust the tension of the seat belts used for the connection of the car seat body to the vehicle seat, further obtaining the possibility to prevent, automatically, the tipping of the body of the car seat in the event of a rear-end collision.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A group 0 and group 1 car seat (1), with position adjustment means, comprising a base element (2) which supports a seat body (3) with the interposition of tilt varying means or varying the tilt of the seat, means being further provided for connection to a seat (70) of a vehicle, as well as tilting means for the additional tilting of said seat body (3), **characterized in that** said tilting means for the additional tilting of said seat body (3) can be activated by way of movement delimiting means (50) for delimiting the movement of an upper pivot (12) connected to said seat body, in an upper slot (14) defined in said base element (2), said tilting means for the additional tilting of said seat body (3) comprising an additional portion (18), which extends substantially transversely from one end of an initial portion (13) of said upper slot (14), access to said additional portion (18) being controlled by said movement delimiting means (50) for delimiting the movement of the upper pivot.

2. The seat according to the preceding claim, **characterized in that** said movement delimiting means comprise a control button (50), which is supported slidingly by said base element (2).

3. The seat according to claim 1, **characterized in that** said tilt varying means comprise said upper pivot (12), which is connected to said seat body (3) and can engage slidingly said initial portion (13) of said upper slot (14), there being also a lower pivot (15), which is connected to said seat body (3) and is accommodated slidingly in a lower slot (16) provided in said base element (2).

4. The seat according to claim 2, **characterized in that** said control button (50) comprises an abutment portion (51), which can be positioned with respect to said initial portion (13) of said upper slot (14) in order to removably prevent access to said additional portion (18), said control button (50) having an overtravel channel (52) which can be arranged at the ends of said initial portion (13) for the insertion of said upper pivot (12) in said additional portion (18), a locking portion (55) being further provided for the insertion of said upper pivot (12) arranged at the ends of said additional portion (18).

5. The seat according to claim 3, **characterized in that** it comprises an adjustment lever (20), which is supported by said lower pivot (15) and is provided with coupling teeth (21) which can be inserted removably in positioning seats (22) provided on said base element (2).

6. The seat according to claim 5, **characterized in that** it comprises elastic means (23), which act between said adjustment lever (20) and said seat body (3) for the removable engagement of said teeth (21) in said positioning seats (22).

7. The seat according to any of the preceding claims, **characterized in that** it comprises, on said base element (2), a pair of guiding recesses (30) for engagement with the lower portion (33) of the seat belts of the motor vehicle, upper recesses (35) being further provided proximate to the center of rotation of said seat body (3), being formed on said seat body (3) and engageable by the upper portion (38) of said seat belts.

8. The seat according to claim 7, **characterized in that** it comprises lower levers (31) for the removable closure of said guiding recesses (30) and oscillating levers (36) for the removable closure of said upper recesses (35).

9. The seat according to any of the preceding claims, **characterized in that** it comprises on said seat body (3) a front slot (40), which is arranged at the lower part of a cutout (41) defined by said seat body (3) for the installation of said seat body (3) so that the rear face of the back of said seat body (3) is directed toward the front part of said vehicle.

10. The seat according to any of claims 2 to 9, **characterized in that** said control button (50) can be operated only when said seat body (3) is arranged so that the rear face of its back is directed toward the front part of said vehicle.

11. The seat according to any of the preceding claims, **characterized in that** it comprises means for preventing the tipping of said seat body (3) arranged so that said back is directed toward the front part of the vehicle, which are constituted by a resting portion (60) defined at the front edge of said seat body (3) in order to provide a plane for resting against the back (70) of said vehicle.

## Patentansprüche

1. Altersgruppe 0 und Altersgruppe 1 Kindersitz (1), mit Positionsanpass-Mitteln umfassend ein Basiselement (2), das einen Sitzkörper (3) unter Zwischenschaltung von Neigungs- variierenden Mitteln zum Variieren der Neigung des Sitzes trägt, bei dem weiter Mittel vorgesehen sind zur Verbindung mit einem Sitz (70) eines Fahrzeugs als auch Schwenkmittel für die zusätzliche Verschwenkung des Sitzkörpers (3), **dadurch gekennzeichnet, dass** die Schwenkmittel für die zusätzliche Verschwenkung des Sitzkörpers (3) über Bewegungs-Beschränkungsmittel (50) zum Beschränken der Bewegung von einer oberen Schwenkachse (12) aktiviert werden kann, die mit dem Sitzkörper verbunden ist, in einem oberen Schlitz (14), der in dem Basiselement (2) definiert ist, wobei die Schwenkmittel für das zusätzliche Verschwenken des Sitzkörpers (3) einen zusätzlichen Bereich (18) umfassen, der sich im Wesentlichen quer von einem Ende eines Anfangsbereichs (13) des oberen Schlitzes (14) erstreckt, wobei Zugang zu dem zusätzlichen Bereich (18) über das Bewegungs-Beschränkungsmittel (50) zum Beschränken der Bewegung der oberen Schwenkachse gesteuert wird.

2. Sitz gemäß dem vorstehenden Anspruch, **dadurch gekennzeichnet, dass** das Bewegungs-Beschränkungsmittel einen Steuerknopf (50) umfasst, der über das Basiselement (2) gleitbar gelagert ist.

3. Sitz gemäß Anspruch 1, **dadurch gekennzeichnet, dass** die neigungs-variierende Mittel die obere Schwenkachse (12) umfassen, die mit dem Sitzkörper (3) verbunden ist und gleitbar in den Eingangsbereich (13) des oberen Schlitzes (14) eingreifen kann, wobei dort auch eine untere Drehachse (15) vorgesehen ist, die mit dem Sitzkörper (3) verbunden ist und gleitbar in einem unteren Schlitz (16) untergebracht ist, der in dem Basiselement (2) vorgesehen ist.

4. Sitz gemäß Anspruch 2, **dadurch gekennzeichnet, dass** der Steuerknopf (50) einen Abstützbereich (51) umfasst, der bezüglich des Eingangs-Bereichs (13) des oberen Schlitzes (14) positioniert werden kann, um entfernbar Zugang zu dem zusätzlichen Bereich (18) zu verhindern, wobei der Steuerknopf (50) einen Nachlauf -Kanal (52) umfasst, der an den Enden des Eingangsbereichs (13) angeordnet sein kann, für die Einführung der oberen Schwenkachse (12) in dem zusätzlichen Bereich (18), wobei weiter ein Sperr-Bereich (55) für die Einführung der oberen Schwenkachse (12) vorgesehen ist, die an den Enden des zusätzlichen Bereichs (18) angeordnet ist.

5. Sitz gemäß Anspruch 3, **dadurch gekennzeichnet, dass** er einen Anpass-Hebel (20) umfasst, der über die untere Schwenkachse (15) gelagert ist und mit Kopplungszähnen (21) vorgesehen ist, die entfernbar in Positioniersitze (22), die an dem Basiselement (2) vorgesehen sind, eingeführt werden können.

6. Sitz gemäß Anspruch 5, **dadurch** gekennzeichet, dass er elastische Mittel (23) umfasst, die zwischen dem Anpasshebel (20) und dem Sitzkörper (3) für einen entfernbaren Eingriff der Zähne (21) in die Positioniersitze (22) wirken.

7. Sitz gemäß einem der vorstehenden Ansprüche, **dadurch gekennzeichnet, dass** er an dem Basiselement (2) ein Paar von Führungs-Ausnehmungen (30) umfasst für einen Eingriff mit dem unteren Bereich (33) von den Sitzgurten des Motorfahrzeugs, wobei weiter obere Ausnekunungen (35) nahe an dem Dreh-Zentrum des Sitzkörpers (3) vorgesehen sind, die an dem Sitzkörper (3) ausgebildet sind und über den oberen Bereich (38) der Sitzgurte eingreifbar sind.

8. Sitz gemäß Anspruch 7, **dadurch gekennzeichnet, dass** er untere Hebel (31) für einen entfernbaren Verschluss der Führungs-Ausnehmungen (30) umfasst und sich hin- und herbewegende Hebel (36) für einen entfernbaren Verschluss der oberen Ausnehmungen (35) umfasst.

9. Sitz gemäß einem der vorstehenden Ansprüche, **dadurch gekennzeichnet, dass** er an dem Sitzkörper (3) einen vorderen Schlitz (40) umfasst, der an dem unteren. Teil von einem Ausschnitt (41) angeordnet ist, der gegenüber dem Sitzkörper (3) definiert ist, für einen Einbau des Sitzkörpers (3) derart, dass die Rückwand der Rückseite des Sitzkörpers (3) zu dem vorderen Teil des Fahrzeugs gerichtet ist.

10. Sitz gemäß einem der Ansprüche 2 bis 9, **dadurch gekennzeichnet, dass** der Steuerknopf (50) nur betätigt werden kann, wenn der Sitzkörper (3) derart angeordnet ist, dass die Rückwand seiner Rückseite zu dem vorderen Teil des Fahrzeugs gerichtet ist.

11. Sitz gemäß einem der vorstehenden Ansprüche, **dadurch gekennzeichnet, dass** er Mittel zum Verhindern des Kippens des Sitzkörpers (3) umfasst, die derart angeordnet sind, dass die Rückseite zu dem vorderen Teil des Fahrzeugs gerichtet ist, die über einen aufliegenden Bereich (60) gebildet sind, der an der vorderen Kante des Sitzkörpers (3) definiert ist, um eine Ebene für ein Auflegen gegen die Rückseite (70) des Fahrzeugs bereit zu stellen.

## Revendications

1. Siège auto (1) de groupe 0 et de groupe 1, comportant des moyens de réglage de position, comprenant un élément de base (2) qui porte un corps de siège (3) avec interposition de moyens de variation d'inclinaison pour faire varier l'inclinaison du siège, des moyens étant en outre prévus pour liaison avec un siège (70) d'un véhicule, ainsi que des moyens d'inclinaison pour une inclinaison supplémentaire du corps de siège (3), **caractérisé en ce que** les moyens d'inclinaison pour l'inclinaison supplémentaire du corps de siège (3) peuvent être activés par des moyens de délimitation de déplacement (50) pour délimiter le déplacement d'un pivot supérieur (12) relié au corps de siège, dans une fente supérieure (14) définie dans l'élément de base (2), les moyens d'inclinaison pour l'inclinaison supplémentaire du corps de siège (3) comprenant une partie supplémentaire (18) qui s'étend de façon sensiblement transverse à partir d'une extrémité d'une partie initiale (13) de la fente supérieure (14), un accès à la partie supplémentaire (18) étant commandé par les moyens de délimitation de déplacement (50) pour délimiter le déplacement du pivot supérieur.

2. Siège selon la revendication précédente, **caractérisé en ce que** les moyens de délimitation de déplacement comprennent un bouton de commande (50) qui est porté à coulissement par l'élément de base (2).

3. Siège selon la revendication 1, **caractérisé en ce que** les moyens de variation d'inclinaison comprennent le pivot supérieur (12) qui est relié au corps de siège (3) et qui peut s'engager à coulissement avec la partie initiale (13) de la fente supérieure (14), un pivot inférieur (15) étant également prévu, et étant relié au corps de siège (3) et étant reçu à coulissement dans une fente inférieure (16) prévue dans l'élément de base (2).

4. Siège selon la revendication 2, **caractérisé en ce que** le bouton de commande (50) comprend une partie de butée (51) qui peut être positionnée par rapport à la partie initiale (13) de la fente supérieure (14) pour empêcher de façon amovible un accès à la partie supplémentaire (18), le bouton de commande (50) comprenant un canal de parcours supplémentaire (52) qui peut être disposé aux extrémités de la partie initiale (13) pour l'insertion du pivot supérieur (12) dans la partie supplémentaire (18), une partie de verrouillage (55) étant en outre prévue pour l'insertion du pivot supérieur (12) agencé aux extrémités de la partie supplémentaire (18).

5. Siège selon la revendication 3, **caractérisé en ce qu'**il comprend un levier de réglage (20) qui est porté par le pivot inférieur (15) et est muni de dents de couplage (21) qui peuvent être insérées de façon amovible dans des logements de positionnement (22) prévus sur l'élément de base (2).

6. Siège selon la revendication 5, **caractérisé en ce qu'**il comprend des moyens élastiques (23) qui agissent entre le levier de réglage (20) et le corps de siège (3) pour un engagement amovible desdites dents (21) dans les logements de positionnement (22).

7. Siège selon l'une quelconque des revendications précédentes, **caractérisé en ce qu'**il comprend, sur l'élément de base (2), une paire d'évidements de guidage (30) destinés à s'engager avec la partie inférieure (33) des courroies de siège du véhicule à moteur, des évidements supérieurs (35) étant en outre prévus près du centre de rotation du corps de siège (3) et étant formés sur le corps de siège (3) et pouvant venir en engagement avec la partie supérieure (38) des courroies de siège.

8. Siège selon la revendication 7, **caractérisé en ce qu'**il comprend des leviers inférieurs (31) pour une fermeture amovible des évidements de guidage (30) et des leviers oscillants (36) pour la fermeture amovible des évidements supérieurs (35).

9. Siège selon l'une quelconque des revendications précédentes, **caractérisé en ce qu'**il comprend, sur le corps de siège (3), une fente avant (40) qui est disposée à la partie inférieure d'une découpe (41) définie par le corps de siège (3) pour installation du corps de siège (3) de sorte que la face arrière du dos du corps de siège (3) est dirigée vers l'avant du véhicule.

10. Siège selon l'une quelconque des revendications 2 à 9, **caractérisé en ce que** le bouton de commande (50) peut être actionné seulement quand le corps de siège (3) est disposé de sorte que la face arrière de son dos est dirigée vers l'avant du véhicule.

11. Siège selon l'une quelconque des revendications précédentes, **caractérisé en ce qu'**il comprend des moyens pour empêcher le basculement du corps de siège (3) disposé de sorte que son dos est dirigé vers l'avant du véhicule, ces moyens étant constitués d'une partie de support (60) définie au niveau du bord avant du corps de siège (3) pour fournir un plan d'appui contre le dos (70) du véhicule.
